(19) Europäisches Patentamt
European Patent Office
Office européen des brevets

(11) **EP 3 239 908 A1**

(12) **EUROPÄISCHE PATENTANMELDUNG**

(43) Veröffentlichungstag:
**01.11.2017 Patentblatt 2017/44**

(51) Int Cl.:
***G06Q 10/04*** *(2012.01)* ***G06Q 10/06*** *(2012.01)*

(21) Anmeldenummer: **17161999.2**

(22) Anmeldetag: **21.03.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.04.2016 DE 102016207454**

(71) Anmelder: **Siemens Aktiengesellschaft**
**80333 München (DE)**

(72) Erfinder:
• **Duckheim, Mathias**
**91052 Erlangen (DE)**
• **Amthor, Arvid**
**98631 Grabfeld OT Nordheim (DE)**
• **Reischböck, Markus**
**91056 Erlangen (DE)**

(54) **VORRICHTUNG FÜR WAHRSCHEINLICHKEITSVORHERSAGEN, MIT EINER SOLCHEN EINRICHTUNG AUSGESTATTETES ENERGIEÜBERTRAGUNGS- UND/ODER ENERGIEVERTEILNETZ UND VERFAHREN FÜR DESSEN BETRIEB**

(57) Es wird eine dahingehend optimierte Einrichtung für Wahrscheinlichkeitsvorhersagen beziehungsweise ein dahingehend optimiertes Energieübertragungs- und/oder Energieverteilnetz beziehungsweise Verfahren für dessen Betrieb vorgeschlagen, dass die Betriebsführung mit einem Netzleitsystem unter systematischer Berücksichtigung von Vorhersageunsicherheiten durchführbar ist. Es fließt insbesondere die Wahrscheinlichkeit mit ein, dass ein Verteilnetz in einem Planungszeitraum stabil, das heißt N-1 sicher, betreibbar ist. Erreicht wird dies durch eine entsprechende Kombination von wenigstens einem einzigen Vorhersage-Modul (FM) für Vorhersagen für einen Planungszeitraum, ein Vorhersage-Analyse-Modul (AM) mit einer Verbindung zu den Vorhersagen des wenigstens einen einzigen Vorhersage-Moduls (FM) und Verbindungen zu Elementen für weitere Informationen für eine Ausgabe geschätzter Vorhersageunsicherheiten, und ein Stabilitätswahrscheinlichkeit-Analyse-Modul (PSA) mit einer Verbindung zu den Vorhersagen des wenigstens einen einzigen Vorhersage-Moduls (FM), einer Verbindung zu den geschätzten Vorhersageunsicherheiten des Vorhersage-Analyse-Moduls (AM) und Verbindungen zu Elementen für weitere Informationen für eine Ausgabe wenigstens einer Information über eine N-1 Stabilität des Verteilnetzes in einem Planungszeitraum.

FIG 1

PSAE

Vorhersage-Modul (FM) → Vorhersage-Analyse Modul (AM) → Stabilitäts-wahrschein-lichkeit-Analyse-Modul (PSA) → Wahrschein-lichkeit N-1 Stabilität; Optimaler Wartungszeitraum

1) Vorhersage für Planungszeitraum:
Erzeugung/Last/Energiefluss

2) Vergangene Vorhersage:
Erzeugung/Last/Energiefluss

3) Vergangen aufgezeichnete Daten:
Erzeugung/Last/Energiefluss

4) Geschätzte Vorhersageunsicherheit

5) Unwägbarkeitenliste

6) Wartungsgerät;
Wartungsdauer

**Beschreibung**

Die Erfindung betrifft eine Einrichtung für Wahrscheinlichkeitsvorhersagen gemäß dem Oberbegriff des Anspruchs 1, ein mit einer solchen Einrichtung ausgestattetes Energieübertragungs- und/oder Energieverteilnetz gemäß dem Oberbegriff des Anspruchs 3 und ein Verfahren für dessen Betrieb gemäß dem Oberbegriff des Anspruchs 5.

Für die Betriebsplanung, zum Beispiel von Wartungsarbeiten, in Energieübertragungs- und/oder Energieverteilnetzen, nachfolgend gegebenenfalls auch nur kurz Übertragungs- und/oder Verteilnetz genannt, ist es wichtig, die in einem Planungszeitraum auftretenden Netzzustände zu kennen. Waren in der Vergangenheit dazu meist nur die Schaltzustände zu betrachten, so werden mit zunehmender Anzahl erneuerbarer Energieerzeuger, nachfolgend gegebenenfalls auch nur kurz erneuerbarer Erzeuger oder Erzeuger genannt, Vorhersagen von Leistungsprofilen von Lasten und Erzeugern immer wichtiger.

Im Gegensatz zu einem Verteilnetz mit hauptsächlich konventionellen Kraftwerken ist in einem von erneuerbaren Erzeugern dominierten Verteilnetz die Energieerzeugung nicht mehr direkt steuerbar und kann nur basierend auf zum Beispiel Wetterprognosen vorhergesagt werden. Hieraus resultiert eine neue Qualität der Systemunsicherheit, die nur durch den Einsatz neuer, auf die veränderten Rahmenbedingungen abgestimmter Methoden beherrschbar ist.

Um Wartungsarbeiten auch in einem erneuerbare Erzeuger dominierten Verteilnetz verlässlich planen zu können, werden die vorhergesagten Einspeise- beziehungsweise Lastprofile als zukünftige Zustände des Verteilnetzes angenommen, bei denen dann entsprechende Energieeinspeisungen beziehungsweise Energieentnahmen an den einzelnen Netzknoten des Verteilnetzes vorgenommen werden. Für diese Zustände wird ermittelt, ob das Verteilnetz stabil betreibbar ist und ob in bestimmten Netzabschnitten Wartungsarbeiten durchgeführt werden können. Wie bereits erwähnt, ist eine wichtige Voraussetzung für den Einsatz dieses Verfahrens die Qualität der Leistungsprofilvorhersagen. Große Vorhersagefehler führen gegebenenfalls zu großen Abweichungen, auf die durch Dispatchmaßnahmen, das heißt beispielsweise durch gezieltes Zu- und Abschalten von Erzeugern beziehungsweise Lasten, reagiert werden muss. Ist jedoch eine Leitung aufgrund von Wartungsarbeiten erst einmal außer Betrieb genommen, so ist in vielen Fällen die Zahl der Gegenmaßnahmen extrem eingeschränkt.

Um dieses Problem in den Griff zu bekommen ist es allgemein bekannt, Vorhersagen mehrerer Vorhersageanbieter zu vergleichen und/oder miteinander zu kombinieren. Durch manuelle Plausibilitätsuntersuchungen von mehreren Vorhersagen wird eine Gewichtung der einzelnen Vorhersage bestimmt. Als endgültige Vorhersage wird dann zum Beispiel die gewichtete Kombination der Einzelvorhersagen angenommen.

Ein Nachteil dieser Lösung ist, dass die kombinierte endgültige Vorhersage eine schlechte Qualität behält, wenn die Einzelvorhersagen schlecht sind. Darüber hinaus handelt es sich bei dieser Lösung um ein ausschließlich manuelles Vorgehen, dessen Qualität auf dem Erfahrungswissen des entsprechenden Bearbeiters basiert.

In dem Dokument US 2014/0025352 A1 wird die Verwendung der so genannten "Stochastischen Optimierung" für die Netzplanung diskutiert. Dabei wird zur Optimierung eine Unsicherheit des zukünftigen Netzzustandes explizit in der Planungsrechnung berücksichtigt, indem ein stochastisches Optimierungsproblem für die Netzplanung formuliert wird. Eine Schwierigkeit bei diesem Lösungsansatz ist die quantitativ realistische Ermittlung und Modellierung der Unsicherheit. Es wird zwar ein Algorithmus offenbart zur Lösung des optimalen Dispatch verschiedener Generatoren, dieser löst aber nicht zufriedenstellend das Stabilitäts- und Wartungsplanungsproblem. Zudem wird die Vorhersageunsicherheit als bekannt vorausgesetzt.

Aufgabe der vorliegenden Erfindung ist, ausgehend von einer Einrichtung der eingangs genannten Art diese in der Weise zu verbessern, dass deren Wahrscheinlichkeitsausgabe erhöht gesichert ist. Weiter ist es Aufgabe der vorliegenden Erfindung, ausgehend von einem Energieübertragungs- und/oder Energieverteilnetz der eingangs genannten Art beziehungsweise einem Verfahren zu dessen Betrieb der eingangs genannten Art ein verbessertes Verteilnetz beziehungsweise ein verbessertes Verfahren zu dessen Betrieb anzugeben, um dadurch die Netzplanung beziehungsweise den Betrieb weiter zu optimieren.

Diese Aufgabe wird bezüglich der Einrichtung erfindungsgemäß gelöst durch eine Einrichtung, die die Merkmale im Kennzeichen des Anspruchs 1 aufweist. Diese Aufgabe wird bezüglich des Energieübertragungs- und/oder Energieverteilnetzes erfindungsgemäß gelöst durch ein Energieübertragungs- und/oder Energieverteilnetz, das die Merkmale im Kennzeichen des Anspruchs 3 aufweist. Diese Aufgabe wird schließlich bezüglich des Verfahrens erfindungsgemäß gelöst durch ein Verfahren, das die Verfahrensschritte im Kennzeichen des Anspruchs 5 durchführt.

Danach weist die erfindungsgemäße Einrichtung für Wahrscheinlichkeitsvorhersagen neben wenigstens einem einzigen, mit Datenbereitstelleinrichtungen verbundenen Vorhersage-Modul (FM) für Vorhersagen für einen Planungszeitraum aus den von den Datenbereitstelleinrichtungen bereitgestellten Daten ein Vorhersage-Analyse-Modul (AM) mit einer Verbindung zu den Vorhersagen des wenigstens einen einzigen Vorhersage-Moduls (FM), einer Verbindung zu Elementen für vergangene Vorhersagen und einer Verbindung zu Elementen für vergangene aufgezeichnete Systemdaten für eine Ausgabe geschätzter Vorhersageunsicherheiten aus den aus den Verbindungen erhaltenen Daten auf, und weist ein Stabilitätswahrscheinlichkeit-Analyse-Modul (PSA) mit einer Verbindung zu den Vorhersagen des wenigstens einen einzigen Vorhersage-Moduls (FM), einer Verbindung zu den geschätzten Vorhersageunsicherheiten des Vorhersage-Analyse-Moduls (AM), einer Verbindung zu Elementen einer Unwägbarkeitenliste mit Unwägbarkeiten und einer Verbindung zu Wartungsgeräten und Elementen für Informationen zu Wartungsdauern für eine Ausgabe wenigstens einer Information über eine N-1 Stabilität in einem Planungszeitraum auf.

Weiter wird danach bezüglich des erfindungsgemäßen Energieübertragungs- und/oder Energieverteilnetz, das ein Netzleitsystem aufweist, das mit wenigstens einem einzigen, mit Datenbereitstelleinrichtungen verbundenen Vorhersage-Modul für Vorhersagen für einen Planungszeitraum aus den von den Datenbereitstelleinrichtungen bereitgestellten Daten von zukünftigen Netzzuständen in Verbindung steht für ein davon abhängiges Bringen des Energieübertragungs- und/oder Energieverteilnetzes in einen aktuellen Betriebszustand durch das Netzleitsystem, vorgeschlagen, ein Vorhersage-Analyse-Modul vorzusehen mit einer Verbindung zu den Vorhersagen des wenigstens einen einzigen Vorhersage-Moduls, einer Verbindung zu Elementen für vergangene Vorhersagen und einer Verbindung zu Elementen für vergangene aufgezeichnete Systemdaten für eine Ausgabe geschätzter Vorhersageunsicherheiten aus den aus den Verbindungen erhaltenen Daten, und ein Stabilitätswahrscheinlichkeit-Analyse-Modul vorzusehen mit einer Verbindung zu den Vorhersagen des wenigstens einen einzigen Vorhersage-Moduls, einer Verbindung zu den geschätzten Vorhersageunsicherheiten des Vorhersage-Analyse-Moduls, einer Verbindung zu Elementen einer Unwägbarkeitenliste mit Unwägbarkeiten und einer Verbindung zu Netzwartungsgeräten und Elementen für Informationen zu Wartungsdauern für eine Ausgabe wenigstens einer Information über eine N-1 Stabilität des Verteilnetzes in einem Planungszeitraum.

Bezüglich des erfindungsgemäßen Verfahrens zum Betrieb eines Energieübertragungs- und/oder Energieverteilnetzes, bei dem Daten bereitgestellt werden für eine Vorhersage für einen Planungszeitraum von zukünftigen Netzzuständen für ein davon abhängiges Bringen des Energieübertragungs- und/oder Energieverteilnetzes in einen aktuellen Betriebszustand, wird vorgeschlagen, eine Vorhersage-Analyse mit den Vorhersagen, mit vergangenen Vorhersagen und mit vergangen aufgezeichneten Systemdaten durchzuführen und geschätzte Vorhersageunsicherheiten auszugeben, und eine Stabilitätswahrscheinlichkeit-Analyse durchzuführen mit den Vorhersagen, mit den geschätzten Vorhersageunsicherheiten, mit Unwägbarkeiten und mit Informationen zu Netzwartungsgeräten und Wartungsdauern für eine Ausgabe wenigstens einer Information über eine N-1 Stabilität des Verteilnetzes in einem Planungszeitraum.

Das danach gebildete Energieübertragungs- und/oder Energieverteilnetz beziehungsweise das durchgeführte Verfahren ermöglicht die Betriebsführung des erfindungsgemäßen Energieübertragungs- und/oder Energieverteilnetzes mit einem Netzleitsystem unter systematischer Berücksichtigung der Vorhersageunsicherheit. Es fließt die Wahrscheinlichkeit mit ein, dass ein Verteilnetz im Planungszeitintervall stabil, das heißt N-1 sicher, betreibbar ist.

Es werden hierzu neben einem Vorhersage-Modul ein Vorhersage-Analyse-Modul und ein Stabilitätswahrscheinlichkeit-Analyse-Modul verwendet, die in der vorgegebenen Weise zusammenarbeiten. Ein Ausführungsbeispiel hierfür ist in der nachfolgenden detaillierten Beschreibung beschrieben.

Bei der bisherigen Lösung, eine kombinierte Vorhersage für die Planung zu verwenden, wird eine unsichere Vorhersage fälschlich als sicher angenommen. Dies führt zu größeren Planungsfehlern als bei der vorliegenden Erfindung, denn hier basiert die Vorhersage auf einer statistischen Auswertung von vergangenen Prognosefehlern.

Das vorgeschlagene Verfahren liefert dem Netzbetreiber eine neue, statistisch abgesicherte Größe, die ihn bei der Betriebsplanung mit ungewissen Lastflüssen unterstützt. Die Methode nutzt vorteilhaft die im Leitsystem vorhandenen Daten, um Vorhersagefehler möglichst realistisch zu quantifizieren.

Vorteilhafte Ausgestaltungen der Erfindung sind Gegenstand von Unteransprüchen.

Danach ist das Stabilitätswahrscheinlichkeit-Analyse-Modul ausgelegt für eine Ausgabe von Informationen über optimale Wartungszeiträume im Verteilnetz, beziehungsweise wird bei der Stabilitätswahrscheinlichkeit-Analyse eine Ausgabe von Informationen über optimale Wartungszeiträume im Verteilnetz durchgeführt.

In einer weiteren besonders vorteilhaften Ausgestaltung der vorliegenden Erfindung sind mindestens auch Wettervorhersage-Daten in den Vorhersageermittlungen mit berücksichtigt.

Dies hat den Vorteil, dass die erfindungsgemäße Methode auch dazu verwendet werden kann, um ein Zeitintervalle zu bestimmen, in denen Wartungsarbeiten mit der höchsten Wahrscheinlichkeit sicher ausführbar sind.

Ein weiterer Vorteil der vorliegenden Erfindung ist, dass es sich bei der vorgeschlagenen Methodik um ein vollautomatisches Entscheidungshilfesystem handelt, welches ohne Eingriff des Operators, das heißt des Netzbetreibers, Entscheidungsvorschläge basierend auf abgesicherten statistischen Methoden erstellt und so optimal die Arbeit des Netzbetreibers unterstützt. Auch kann durch diese Methodik sicher gestellt werden, dass die Qualität der Entscheidungsvorschläge ein konstant hohes Niveau besitzt, da es nicht auf dem Erfahrungswissen einzelner Personen basiert.

Gemäß der hier vorliegenden Erfindung ermöglicht die neuartige Kombination von Vorhersage-, Vorhersage-Analyse- und Stabilitätswahrscheinlichkeit-Analyse-Modul die Ermittlung aller für die Stabilitätsermittlung notwendigen Größen innerhalb des Leitsystems. In der im Ausführungsbeispiel dargestellten Art kann die Stabilitätsanalyse mit bestehenden im Leitsystem vorhandenen Funktionen realisiert werden. Weitere Informationen zu den technischen Merkmalen sind dem Ausführungsbeispiel zu entnehmen.

Bekanntermaßen verlangen in jüngsten Zeiten Netzbetreiber verstärkt nach Leitsystemfunktionen, die den Umgang mit fluktuierenden, unsicheren Erzeugern vereinfachen, was mit der vorliegenden Erfindung gelöst wird.

Nachfolgend wird ein Ausführungsbeispiel der Erfindung anhand einer Zeichnung näher erläutert. Darin zeigen:

Figur 1        einen Überblick über die Komponenten für die Stabilitätswahrscheinlichkeits-Analyse,

Figur 2A        einen Überblick über die Definition von Zeiträumen und konkreten Einzelzeitpunkten,

Figur 2B        ein beispielhaftes Energieübertragungs- und/oder Energieverteilnetz mit einer Schreibweise für den Energiefluss darin,

Figur 3A        ein erstes Ausführungsbeispiel eines VorhersageModuls nach der Figur 1 mit einer Vorhersage eines externen Vorhersageanbieters,

Figur 3B        ein zweites Ausführungsbeispiel eines VorhersageModuls nach der Figur 1 mit einer integrierten Vorhersage,

Figur 4        ein Vorhersage-Analyse-Modul nach der Figur 1, und

Figur 5        ein Stabilitätswahrscheinlichkeit-Analyse-Modul nach der Figur 1.

Netzleitsteuermittel unterstützen Netzbetreiber mit Betriebsführungs- und operativen Planungsfunktionen. Ein gewöhnliches Vorgehen bei der Planung von Netzmaßnahmen basiert auf Zeitplänen für ein Stromerzeugen durch Kraftwerksanlagen und auf vorhergesagten Leistungsprofilen bezüglich unwägbarer Lasten und unkontrollierbarer erneuerbarer Erzeuger. Diese Profile und Zeitpläne legen den Netzzustand fest, das heißt, den Energiefluss an einem jeden Netzkonten. Der Netzbetreiber beurteilt die Stabilität, das heißt die N-1 Robustheit, des Verteilnetzes in dieser Situation, unter Verwendung einer speziellen Funktion beziehungsweise Stabilitätsanalysefunktion.

Mit großen Fehlern in den Vorhersageprofilen passieren aber immer größer und größer werdende Planungsfehler. Diese Fehler müssen kompensiert werden durch Vorhalten von Leistungsreserven und Durchführen von Dispatchmaßnahmen, was zusätzliche Kosten verursacht.

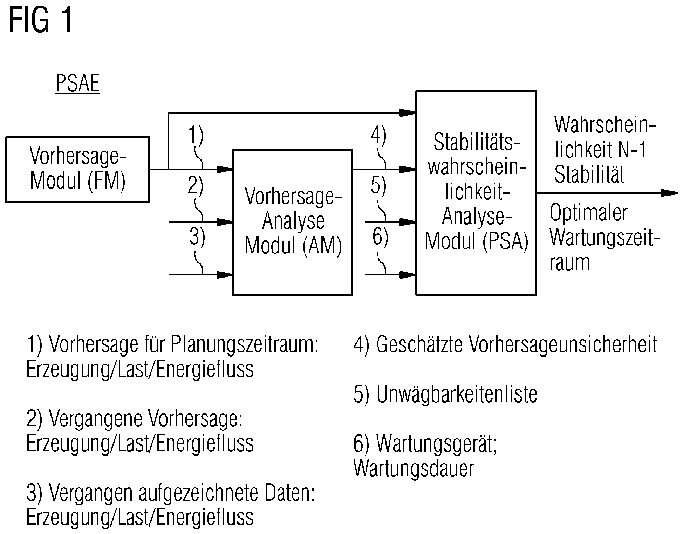

Gemäß der vorliegenden Erfindung analysiert eine Einrichtung für Wahrscheinlichkeitsvorhersagen PSAE (Figur 1) vergangene Vorhersagen und vergangen aufgezeichnete Daten sowie gegenwärtige Vorhersagen, beispielsweise jeweils über erzeugte Leistungen, Lasten und Energieflüsse, und ermittelt daraus eine Wahrscheinlichkeit für einen stabilen N-1 Zustand, beispielsweise N-1 Netzzustand, für einen Planungszeitraum. Diese Wahrscheinlichkeit liefert einem Netzbetreiber ein Maß dafür, wie zuverlässig seine Einschätzung bezüglich der Netzstabilität im Planungszeitraum ist. Zum Beispiel ist eine Wahrscheinlichkeit über 90% für ein stabiles Verteilnetz akzeptierbar. Wenn eine Wahrscheinlichkeit unter 90% erhalten ist, müssen Zeitpläne für Energieerzeugungen durch Kraftwerksanlagen angepasst werden oder Windparks müssen unterrichtet werden über bevorstehende Kürzungen. Ein enthaltenes Stabilitätswahrscheinlichkeit-Analyse-Modul PSA (Figur 1) kann darüber hinaus den Zeitraum mit der höchsten Wahrscheinlichkeit für einen stabilen Netzzustand unter Wartungsbedingungen erkennen. In diesem Fall ist die Wahrscheinlichkeit einer N-1 Stabilität für einen ausgeschlossenen Netzzustand mit Wartungsgerät ermittelt. Die zuletzt genannte Ermittlung unterstützt bei der Entscheidung, wann Wartungsmaßnahmen ausführbar sind.

Wie die Figur 1 zeigt, umfasst die Einrichtung für Wahrscheinlichkeitsvorhersagen PSAE ein Vorhersage-Modul FM, ein Vorhersage-Analyse-Modul AM und ein Stabilitätswahrscheinlichkeit-Analyse-Modul PSA.

Das Vorhersage-Modul FM erstellt Vorhersagen von, auch nicht kontrollierbaren Lasten, Energieerzeugungen oder Energieflüssen an in der Zeichnung nicht näher gezeigten Netzknoten eines in der Zeichnung nicht näher gezeigten Verteilnetzes. Ein solches Modul ist typischerweise Teil einer Steuerungskomponente. Die Vorhersage ist entweder erhalten von einem externen Dienstleister oder von einer internen Funktion der Netzsteuereinrichtung, basierend auf vergangener Daten.

Das Vorhersage-Analyse-Modul AM verwendet vergangene und aufgezeichnete Daten zur Ermittlung einer Abschätzung bezüglich der Unsicherheit der Vorhersage.

Das Stabilitätswahrscheinlichkeit-Analyse-Modul PSA verwendet die vorgenannten Daten zur Ermittlung der Wahrscheinlichkeit für das Verteilnetz und bezüglich einer N-1 Stabilität des Verteilnetzes. Außerdem verwendet das Stabilitätswahrscheinlichkeit-Analyse-Modul PSA diese Daten zur Ermittlung des Zeitraums mit der höchsten Stabilitätswahrscheinlichkeit unter Wartungsbedingungen.

Berücksichtigt sein können darüber hinaus Unwägbarkeiten, die in einer Unwägbarkeitenliste aufgeführt sind, und Informationen bezüglich der zu wartenden Geräte beziehungsweise der noch vorhandenen Geräte beziehungsweise Anlagen und Wartungsdauern.

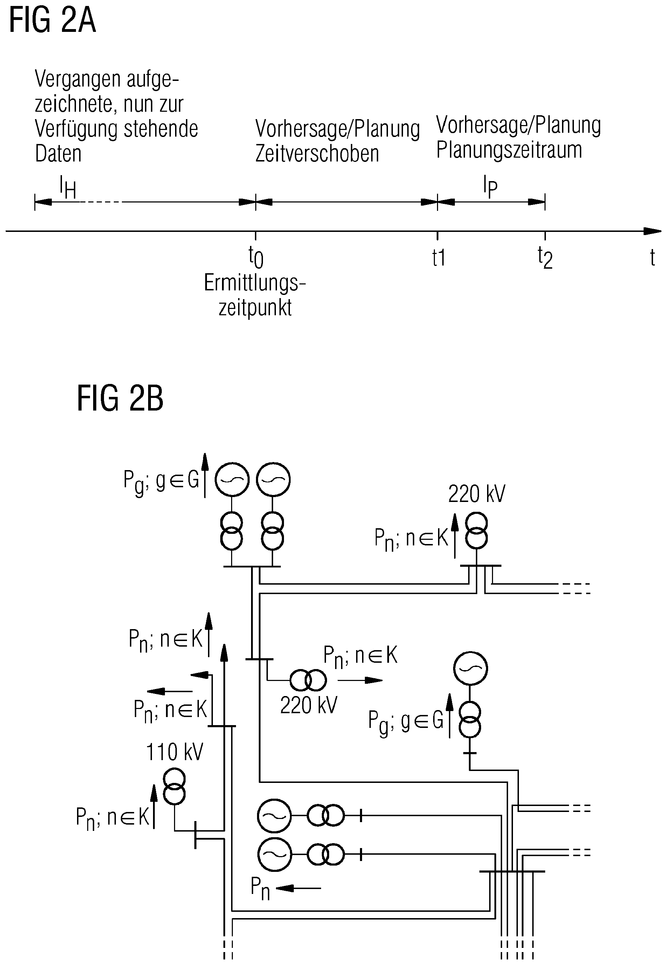

Figur 2A gibt einen Überblick über die Schreibweise für die verschiedenen Zeitintervalle, die für die Einrichtung für Wahrscheinlichkeitsvorhersagen PSAE wichtig sind. Die Ermittlung ist zu einem Zeitpunkt $t_0$ ausgeführt. Der Zeitraum, für den die Ermittlung erfolgt, ist als Vorhersage- beziehungsweise Planungszeitraum $I_P$ benannt. Dieser Zeitraum ist zeitlich vom Zeitpunkt $t_0$ durch den Planungszeitraum abgesetzt. Vergangene Daten, beispielsweise aufgezeichnete Energieflüsse und vergangene Vorhersagen, sind aufgezeichnet und zur Verfügung gestellt im Zeitraum $I_H$, der dem

Zeitpunkt $t_0$ vorausgeht.

Figur 2B zeigt die Schreibweise für den Energiefluss an den Netzknoten eines beispielhaften Energieübertragungs- und/oder Verteilnetzes zu anderen Verteilnetzen. Energieeinspeisungen, die in der Figur 2A durch verstärkt gezeichnete separate Pfeile kenntlich gemacht sind, sind für kontrollierbare Energieerzeuger beschrieben in der Form $\mathbf{P}_g; g \in \mathbf{G}$ und für Einspeisungen in andere Verteilnetze in der entsprechenden Form $\mathbf{P}_n; n \in K$. Die Indexgruppen $G$ und $K$ bezeichnet die Gruppen Erzeugersammelschienen beziehungsweise Netzknoten des Verteilnetzes. Dabei ist das Übereinkommen eines positiven Energieflusses weg von einer Sammelschiene beziehungsweise einem Netzkonten verwendet. Das hat zur Folge, dass die Energie, die von einem Erzeuger $\mathbf{P}_g$ zur Verfügung gestellt ist, normalerweise negativ ist.

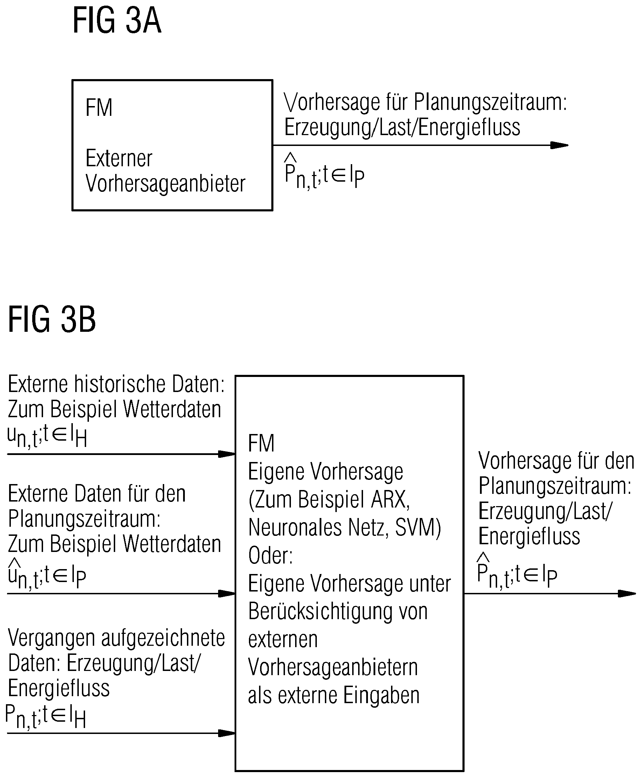

Das in der Figur 3A gezeigte Vorhersage-Modul FM erstellt eine Vorhersage für das Energieprofil $_{n,t}$ im Planungszeitraum $I_P$. Figur 3A zeigt ein erstes Ausführungsbeispiel eines Vorhersage-Moduls FM, bei dem das Energieprofil $_{n,t}$ von einem externen Vorhersageanbieter erhalten ist. Der externe Vorhersageanbieter wird dazu in der Zeichnung nicht näher gezeigte vergangene Daten heranziehen und verwenden. Da Energieerzeugungen aus erneuerbaren Energiequellen einen sehr starken Einfluss auf den Energiefluss in den Netzknoten der Verteilnetze haben, hat der externe Vorhersageanbieter auch Wettervorhersagen mit einzubeziehen.

Figur 3B zeigt ein zweites Ausführungsbeispiel eines Vorhersage-Moduls FM, das in ein Großsystem wie zum Beispiel einem in der Fachwelt bekannten gemeinschaftlichen EMS/DMS/SCADA-System (EMS: Energy Management System; DMS: Distribution Management System; SCADA: Supervisory Control and Data Acquisition) integriert ist und auf diese Weise integrierte Vorhersagen liefert.

Die Figur 3B zeigt beispielhaft Standardmethoden für den Erhalt einer derartigen Vorhersage wie nach dem autoregressivem Modell mit externen Eingabedaten (ARX), künstliche neuronale Netzwerke und Support-Vektor-Maschinen (SVM). Verschiedene Arten der Eingabe sind verwendet: Vergangen aufgezeichnete Energieflüsse $\mathbf{P}_{n,t}; t \in I_H$ an den Netzknoten der Verteilnetze, externe vergangene Eingabedaten wie zum Beispiel vorhergesagte Wetterdaten wie zum Beispiel vorhergesagter Daten zu Windgeschwindigkeit, Direktstrahlung (DHI: Direct Normal Irradiation) und diffuser Strahlung (DHI: Diffuse Horizontal Irradiation), und vorhergesagte Daten zu Temperatur wie auch vorhergesagte externe Daten für den Planungs- beziehungsweise Vorhersagezeitraum.

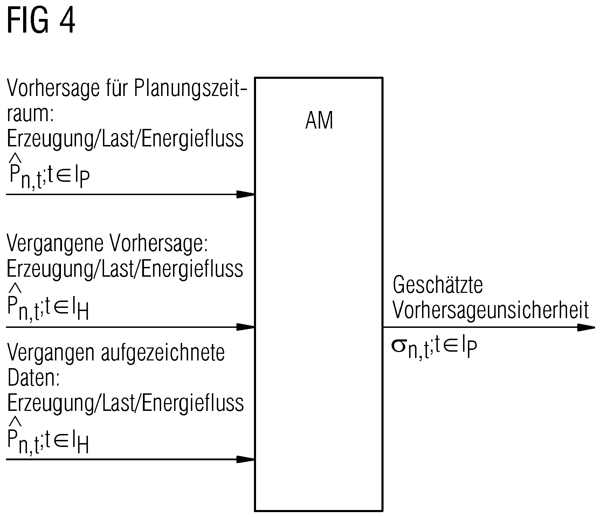

Figur 4 zeigt ein Beispiel für ein Vorhersage-Analyse-Modul PSA. Das Vorhersage-Analyse-Modul PSA schätzt die Unsicherheit des vorhergesagten Energieprofils ab. Dies erfolgt durch Bewertung der auf vergangenen Daten basierender Vorhersageleistung, wie nachfolgend näher erläutert:

Figur 4 zeigt das Vorhersage-Analyse-Modul PSA mit Eingangs- und Ausgangsdaten. Das Modul verwendet vergangene Vorhersagen $_{n,t}; t \in I_H$ mit dem gleichen Vorhersageversatz, vergangen aufgezeichnete Daten $\mathbf{P}_{n,t}; t \in I_H$ und Vorhersagen $_{n,t}; t \in I_P$ für den Vorhersage- beziehungsweise Planungszeitraum.

Die Ausgabe ist die Unsicherheit der Vorhersage $\sigma_{n,t}; t \in I_P$, die definiert ist beispielsweise als die Varianz eines Gauß'schen Verteilungsmodells.

Die aktuelle Vorhersage $_{n,t}; t \in I_P$ ist verwendet aus folgendem Grund: Es existieren Korrelationen zwischen Unsicherheit und tatsächlichem Ausmaß der Energieversorgung. Wenn zum Beispiel eine Photovoltaikenergieerzeugung vorhergesagt ist, ist die Vorhersagerichtigkeit besser für sehr große und sehr kleine Vorhersageenergien. Da zum Zeitpunkt der Vorhersage die aktuellen Energieflüsse im Planungszeitraum unbekannt sind, sind die vorhergesagten Energien benutzt.

Die Vorhersageunsicherheit kann abgeschätzt sein gemäß den nachfolgend angegebenen Schritten:

Erstens: Das vorhergesagte Energieprofil ist zugeordnet zu einer Klasse $v$ in einer endlichen Gruppe von Klassen. Diese Gruppe von Klassen kann für den Energiefluss beispielsweise sein: $v = 1$ (schwach ausgeprägt), $v = 2$ (mittelmäßig ausgeprägt) und $v = 3$ (stark ausgeprägt). Die Klassifikation ist erhalten von einem Bündelungsalgorithmus, der mit vergangenen Vorhersagen trainiert ist.

Zweitens: Die Unsicherheit ist bewertet als die Standardabweichung der vergangenen Vorhersagen in der gleichen Klasse, das heißt mit dem gleichen Planungsversatz, von den vergangen aufgezeichneten Daten.

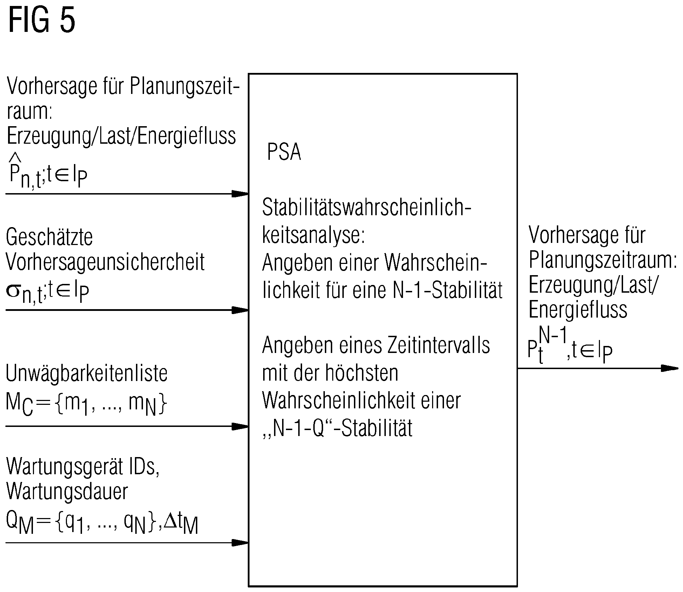

Figur 5 zeigt ein Stabilitätswahrscheinlichkeit-Analyse-Modul PSA, das die Ergebnisse verwendet, die von den oben beschriebenen Modulen erhalten sind. Aus diesen Ergebnissen ermittelt das Vorhersage-Analyse-Modul PSA die Wahrscheinlichkeit für das Verteilnetz für eine N-1 Stabilität. Für die Unsicherheit ist beispielsweise ein Gauß'sches Modell angenommen. Für die Wahrscheinlichkeit eines Energieflusses $\mathbf{k} \in \mathbf{K}$ zu einer Zeit $t$ ist beispielsweise angenommen:

$$p_{k,t}(P) = N\left(P\middle|\hat{P}_{k,t}, \sigma_{k,t}^2\right) = \frac{1}{\sqrt{2\pi\sigma_{k,t}^2}} e^{-\frac{(p-\beta_{k,t})^2}{2\sigma_{k,t}^2}}$$

$$\text{(Gl 1)}.$$

Die Ermittlung der Wahrscheinlichkeit der N-1 Stabilität erfolgt durch numerische Iteration der Zustandsverteilungen in der Gleichung 1 (Gl 1), die eine Vorhersage macht für den Planungszeitraum.

1. Ein Zustandsvektor ist ausgehend vom Unsicherheitsmodell nach der Gleichung 1 mit der quantifizierten Unsicherheit ist gezeichnet. Der Zustand ist indexiert durch einen Iterationsindex $\xi$**=1, ..., N**$_{Sample}$.

2. Eine Stabilitätskalkulation ist unter Verwendung einer Unwägbarkeitenliste ausgeführt mit entweder dem Ergebnis $X_\xi$=1; $\xi$=1, ..., $N_{Sample}$ (Stabilität liegt vor) oder dem Ergebnis $X_\xi$=0; $\xi$=1, ..., $N_{Sample}$ (Stabilität liegt nicht vor).

3. Dies wird $N_{Sample}$-Mal wiederholt.

4. Die Wahrscheinlichkeit für Stabilität ist als

$$p_{t,stable} = \sum_{\xi=1}^{N_{Sample}} \cdot X_\xi / N_{Sample}$$

gegeben.

Wartungsarbeiten im Verteilnetz erfordern das Abschalten von Komponenten des Verteilnetzes für eine vorgegebene Zeitdauer. Für die Zeitplanung der Wartungsarbeiten ist es notwendig, die Wartungszeiten im Planungszeitraum so zu ermitteln, dass zu den Wartungszeiten die größte Wahrscheinlichkeit eines stabilen Zustandes unter den Abschaltbedingungen beziehungsweise Wartungsbedingungen besteht. Diese Zeiträume sind beispielsweise in folgender Art und Weise ermittelt:

1. Die Ermittlung der N-1 Stabilität nach den obigen Schritten 1. bis 5. ist für jeden Zeitraum einer Verteilnetzkonfiguration ausgeführt, in dem die Wartungsgeräte $Q_M$, das heißt die zu wartenden Geräte, aus dem System sicherheitstechnisch herausgenommen sind. Dies resultiert in einer Folge von Wahrscheinlichkeiten $p_{t,stable}$ für das Verteilnetz unter Wartungsbedingungen mit einer N-1 Stabilität.

2. Die miteinander verbundene Wahrscheinlichkeit für das Vorhandensein eines stabilen Verteilnetzes über den gesamten Wartungszeitraum ist beispielsweise ermittelbar nach folgender funktioneller Beziehung:

$$p_{comp.,t,\Delta t_M} = \prod_{t'=t}^{t'=t+\Delta t_M} p_{t',stable}$$

$$\text{(Gl 2)}.$$

Es werden diejenigen Zeiträume ausgewählt, welche die höchste verbundene Wahrscheinlichkeit für das Vorliegen eines stabilen Verteilnetzes unter Wartungsbedingungen für den gesamten Wartungszeitraum haben. Hierfür ist der Startzeitpunkt der Wartungsarbeiten beispielsweise nach folgender funktioneller Beziehung ermittelt:

$$t_{start} = arg \min_t p_{comp.,t,\Delta t_M}$$

(Gl 3).

**Patentansprüche**

1. Einrichtung für Wahrscheinlichkeitsvorhersagen, umfassend wenigstens ein einziges, mit Datenbereitstelleinrichtungen verbundenes Vorhersage-Modul (FM) für Vorhersagen für einen Planungszeitraum aus den von den Datenbereitstelleinrichtungen bereitgestellten Daten,
**dadurch gekennzeichnet, dass**

- ein Vorhersage-Analyse-Modul (AM) mit einer Verbindung zu den Vorhersagen des wenigstens einen einzigen Vorhersage-Moduls (FM), einer Verbindung zu Elementen für vergangene Vorhersagen und einer Verbindung zu Elementen für vergangene aufgezeichnete Systemdaten für eine Ausgabe geschätzter Vorhersageunsicherheiten aus den aus den Verbindungen erhaltenen Daten vorgesehen ist, und
- ein Stabilitätswahrscheinlichkeit-Analyse-Modul (PSA) mit einer Verbindung zu den Vorhersagen des wenigstens einen einzigen Vorhersage-Moduls (FM), einer Verbindung zu den geschätzten Vorhersageunsicherheiten des Vorhersage-Analyse-Moduls (AM), einer Verbindung zu Elementen einer Unwägbarkeitenliste mit Unwägbarkeiten und einer Verbindung zu Wartungsgeräten und Elementen für Informationen zu Wartungsdauern für eine Ausgabe wenigstens einer Information über eine N-1 Stabilität in einem Planungszeitraum vorgesehen ist.

2. Einrichtung nach Anspruch 1,
**dadurch gekennzeichnet, dass**

- das Stabilitätswahrscheinlichkeit-Analyse-Modul (PSA) ausgelegt ist für eine Ausgabe von Informationen über optimale Wartungszeiträume.

3. Energieübertragungs- und/oder Energieverteilnetz, aufweisend ein Netzleitsystem, das mit wenigstens einem einzigen, mit Datenbereitstelleinrichtungen verbundenen Vorhersage-Modul (FM) für Vorhersagen für einen Planungszeitraum aus den von den Datenbereitstelleinrichtungen bereitgestellten Daten von zukünftigen Netzzuständen in Verbindung steht für ein davon abhängiges Bringen des Energieübertragungs- und/oder Energieverteilnetzes in einen aktuellen Betriebszustand durch das Netzleitsystem,
**dadurch gekennzeichnet, dass**

- ein Vorhersage-Analyse-Modul (AM) mit einer Verbindung zu den Vorhersagen des wenigstens einen einzigen Vorhersage-Moduls (FM), einer Verbindung zu Elementen für vergangene Vorhersagen und einer Verbindung zu Elementen für vergangene aufgezeichnete Systemdaten für eine Ausgabe geschätzter Vorhersageunsicherheiten aus den aus den Verbindungen erhaltenen Daten vorgesehen ist, und
- ein Stabilitätswahrscheinlichkeit-Analyse-Modul (PSA) mit einer Verbindung zu den Vorhersagen des wenigstens einen einzigen Vorhersage-Moduls (FM), einer Verbindung zu den geschätzten Vorhersageunsicherheiten des Vorhersage-Analyse-Moduls (AM), einer Verbindung zu Elementen einer Unwägbarkeitenliste mit Unwägbarkeiten und einer Verbindung zu Netzwartungsgeräten und Elementen für Informationen zu Wartungsdauern für eine Ausgabe wenigstens einer Information über eine N-1 Stabilität des Verteilnetzes in einem Planungszeitraum vorgesehen ist.

4. Energieübertragungs- und/oder Energieverteilnetz nach Anspruch 3,
**dadurch gekennzeichnet, dass**

- das Stabilitätswahrscheinlichkeit-Analyse-Modul (PSA) ausgelegt ist für eine Ausgabe von Informationen über optimale Wartungszeiträume im Verteilnetz.

5. Verfahren zum Betreiben eines Energieübertragungs- und/ oder Energieverteilnetzes, bei dem Daten bereitgestellt werden für eine Vorhersage für einen Planungszeitraum von zukünftigen Netzzuständen für ein davon abhängiges Bringen des Energieübertragungs- und/oder Energieverteilnetzes in einen aktuellen Betriebszustand,
**dadurch gekennzeichnet, dass**

- eine Vorhersage-Analyse mit den Vorhersagen, mit vergangenen Vorhersagen und mit vergangen aufgezeichneten Systemdaten durchgeführt und geschätzte Vorhersageunsicherheiten ausgegeben werden, und dass
- eine Stabilitätswahrscheinlichkeit-Analyse mit den Vorhersagen, mit den geschätzten Vorhersageunsicherheiten, mit Unwägbarkeiten und mit Informationen zu Netzwartungsgeräten und Wartungsdauern eine Ausgabe wenigstens einer Information über eine N-1 Stabilität des Verteilnetzes in einem Planungszeitraum durchgeführt wird.

6. Verfahren nach Anspruch 5,
   **dadurch gekennzeichnet, dass**

   - mit der Stabilitätswahrscheinlichkeit-Analyse eine Ausgabe von Informationen über optimale Wartungszeiträume im Verteilnetz durchgeführt wird.

7. Verfahren nach Anspruch 5 oder 6,
   **dadurch gekennzeichnet, dass**

   - Wetterdaten mit berücksichtigt werden.

# FIG 1

PSAE

Vorhersage-Modul (FM)

1)
2)
3)

Vorhersage-Analyse Modul (AM)

4)
5)
6)

Stabilitäts-wahrschein-lichkeit-Analyse-Modul (PSA)

Wahrschein-lichkeit N-1 Stabilität

Optimaler Wartungszeit-raum

1) Vorhersage für Planungszeitraum: Erzeugung/Last/Energiefluss

2) Vergangene Vorhersage: Erzeugung/Last/Energiefluss

3) Vergangen aufgezeichnete Daten: Erzeugung/Last/Energiefluss

4) Geschätzte Vorhersageunsicherheit

5) Unwägbarkeitenliste

6) Wartungsgerät; Wartungsdauer

# FIG 2A

Vergangen aufgezeichnete, nun zur
Verfügung stehende
Daten

Vorhersage/Planung
Zeitverschoben

Vorhersage/Planung
Planungszeitraum

$I_H$

$I_P$

$t_0$

$t1$

$t_2$

$t$

Ermittlungszeitpunkt

# FIG 2B

$P_g; g \in G$

220 kV

$P_n; n \in K$

$P_n; n \in K$

$P_n; n \in K$

$P_n; n \in K$

220 kV

$P_g; g \in G$

110 kV

$P_n; n \in K$

$P_n$

## FIG 3A

FM

Externer
Vorhersageanbieter

Vorhersage für Planungszeitraum:
Erzeugung/Last/Energiefluss

$\hat{P}_{n,t}; t \in I_P$

## FIG 3B

Externe historische Daten:
Zum Beispiel Wetterdaten
$u_{n,t}; t \in I_H$

Externe Daten für den
Planungszeitraum:
Zum Beispiel Wetterdaten
$\hat{u}_{n,t}; t \in I_P$

Vergangen aufgezeichnete
Daten: Erzeugung/Last/
Energiefluss
$P_{n,t}; t \in I_H$

FM
Eigene Vorhersage
(Zum Beispiel ARX,
Neuronales Netz, SVM)
Oder:
Eigene Vorhersage unter
Berücksichtigung von
externen
Vorhersageanbietern
als externe Eingaben

Vorhersage für den
Planungszeitraum:
Erzeugung/Last/
Energiefluss
$\hat{P}_{n,t}; t \in I_P$

# FIG 4

Vorhersage für Planungszeitraum:
Erzeugung/Last/Energiefluss
$\hat{P}_{n,t}; t \in I_P$

Vergangene Vorhersage:
Erzeugung/Last/Energiefluss
$\hat{P}_{n,t}; t \in I_H$

Vergangen aufgezeichnete
Daten:
Erzeugung/Last/Energiefluss
$\hat{P}_{n,t}; t \in I_H$

AM

Geschätzte
Vorhersageunsicherheit
$\sigma_{n,t}; t \in I_P$

# FIG 5

Vorhersage für Planungszeitraum:
Erzeugung/Last/Energiefluss
$\hat{P}_{n,t}; t \in I_P$

Geschätzte
Vorhersageunsichercheit
$\sigma_{n,t}; t \in I_P$

Unwägbarkeitenliste
$M_C = \{m_1, ..., m_N\}$

Wartungsgerät IDs,
Wartungsdauer
$Q_M = \{q_1, ..., q_N\}, \Delta t_M$

PSA

Stabilitätswahrscheinlichkeitsanalyse:
Angeben einer Wahrscheinlichkeit für eine N-1-Stabilität

Angeben eines Zeitintervalls
mit der höchsten
Wahrscheinlichkeit einer
„N-1-Q"-Stabilität

Vorhersage für
Planungszeitraum:
Erzeugung/Last/
Energiefluss
$P_t^{N-1}, t \in I_P$

Europäisches Patentamt
European Patent Office
Office européen des brevets

# EUROPÄISCHER RECHERCHENBERICHT

Nummer der Anmeldung

EP 17 16 1999

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2014/025352 A1 (GHOSH SOUMYADIP [US] ET AL) 23. Januar 2014 (2014-01-23) * Abbildung 11 * ----- | 1-7 | INV. G06Q10/04 G06Q10/06 |
| X | Anonymous: "CS109 Project - Building Energy Consumption Prediction", , 25. April 2016 (2016-04-25), XP055370513, Gefunden im Internet: URL:https://web-beta.archive.org/web/20160 425115841/http://cs109-energy.github.io/ [gefunden am 2017-05-09] * sections Motivation and Data Collection * ----- | 1-7 | |

RECHERCHIERTE SACHGEBIETE (IPC)

H02J
G06Q

Der vorliegende Recherchenbericht wurde für alle Patentansprüche erstellt

| Recherchenort | Abschlußdatum der Recherche | Prüfer |
|---|---|---|
| München | 26. Mai 2017 | Flores Sanchez, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 16 1999

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2017

| Im Recherchenbericht angeführtes Patentdokument | Datum der Veröffentlichung | Mitglied(er) der Patentfamilie | Datum der Veröffentlichung |
|---|---|---|---|
| US 2014025352 A1 | 23-01-2014 | US 2014025351 A1<br>US 2014025352 A1<br>US 2015278412 A1 | 23-01-2014<br>23-01-2014<br>01-10-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140025352 A1